# EUROPÄISCHE PATENTSCHRIFT

(11) **EP 3 974 630 B1**
(45) Veröffentlichungstag und Bekanntmachung des Hinweises auf die Patenterteilung: **16.10.2024**
(21) Anmeldenummer: 21189066.0
(22) Anmeldetag: 02.08.2021
(51) Int. Cl.: F01P 7/16, F04D 19/00, F16D 35/02, F16D 48/06

(54) **KÜHLGEBLÄSE UND BETRIEBSVERFAHREN DAFÜR**
COOLING FAN AND METHOD FOR OPERATING THE SAME
VENTILATEUR DE REFROIDISSEMENT ET SON PROCÉDÉ DE FONCTIONNEMENT

(30) Priorität: 28.09.2020 DE 102020125317
(43) Veröffentlichungstag der Anmeldung: 30.03.2022
(73) Patentinhaber: CLAAS Tractor S.A.S., 78141 Vélizy-Villacoublay Cedex (FR)
(72) Erfinder: Renaud, Jeremy, 27310 Bourg Achard (FR); Begot, Jerome, 78500 Sartrouville (FR); Dussere, Thibaut, 72000 Le Mans (FR)
(74) Vertreter: CLAAS Gruppe

(56) Entgegenhaltungen:
- EP-A1- 3 462 004
- EP-A2- 2 042 767
- US-A1- 2003 079 952

## Beschreibung

Die vorliegende Erfindung betrifft ein Kühlgebläse, ein Motoraggregat, in dem ein Verbrennungsmotor mit dem Kühlgebläse kombiniert ist, sowie eine landwirtschaftliche Maschine, in der das Kühlgebläse bzw. das Motoraggregat zum Einsatz kommen.

Eine verbreitete Lösung zum Kühlen einer rotierenden Maschine ist, ein Lüfterrad mechanisch an eine Welle der Maschine zu koppeln und den so erzeugten Luftstrom unmittelbar über die Maschine oder über einen mit ihr verbundenen Wärmetauscher zu leiten. Da sowohl die abzuführende Wärmeleistung als auch der Massenstrom des Gebläses mit der Drehzahl zunehmen, ist es möglich, in einem breiten Drehzahlbereich die erforderliche Kühlung energieeffizient bereitzustellen. Da allerdings Wärmeleistung und Massenstrom nicht exakt proportional sind bzw. die Wärmeleistung neben der Drehzahl auch von anderen Faktoren abhängt, muss ein ungeregeltes Gebläse so ausgelegt sein, dass es auch unter ungünstigen Bedingungen eine ausreichende Kühlung gewährleistet, d.h. unter günstigen Bedingungen ist sein Massenstrom größer als nötig, und zu seiner Erzeugung wird unnötig Energie verbraucht.

Um diesem Nachteil abzuhelfen, sind Kühlgebläse vorgeschlagen worden, in denen ein Lüfterrad nicht immer starr an eine Eingangswelle gekoppelt ist, sondern ein Schlupf zwischen beiden es dem Lüfterrad in einem nicht starr gekoppelten Zustand ermöglicht, langsamer zu laufen als bei starrer Kopplung. Durch Dosieren des Schlupfs kann die Leistung des Gebläses kann genau auf den zum Aufrechterhalten einer Solltemperatur des Motors nötigen Wert geregelt werden. Allerdings ist der Schlupf zwischen Eingangswelle und Lüfterrad zwangsläufig mit Reibungsverlusten und folglich mit Wärmeerzeugung verbunden, die bei hohen Drehzahlen zu einer zerstörerischen Überhitzung führen kann. Bei den sogenannten Viscokupplungen, bei denen Drehmoment zwischen Antriebs- und Abtriebsseite über eine dazwischenliegende zähe Ölschicht übertragen wird, kann die Überhitzung zu einer Schädigung des Öls und damit zu einem dauerhaft veränderten Übertragungsverhalten der Kupplung führen. Um dies zu vermeiden, wird in EP 2 715 085 B1 und US2003/0079952 A1 vorgeschlagen, bei hohen Drehzahlen einen Betrieb nur in relativ verlustarmen Stellungen einer geschlossenen oder offenen Stellung zuzulassen, einen dazwischenliegenden mittleren Bereich von Stellungen hingegen zu sperren. Dies hat zur Folge, dass bei Betrieb des Motors an einem Arbeitspunkt, an dem eine Stellung der Kupplung in dem mittleren Bereich angemessen wäre, um den Kühlbedarf des Motors zu decken, stattdessen zwischen Stellungen beiderseits dieses mittleren Bereichs hin- und hergeschaltet wird: befindet sich die Kupplung in einer Stellung, die weiter geschlossen ist als die Stellungen des mittleren Bereichs, dann führt dies zu einem schnellen, geräuschvollen Lauf des Gebläses, durch den die Motortemperatur abnimmt. Wenn dieser unter seine Solltemperatur abgekühlt ist, und folglich eine niedrigere Gebläseleistung genügen würde, dann wird die Kupplung in eine Stellung versetzt, die weiter geöffnet ist als die Stellungen des mittleren Bereiches. Das Gebläse läuft dann langsamer und leiser als zuvor, kühlt aber nicht mehr ausreichend, so dass irgendwann in die weiter geschlossene Stellung zurückgeschaltet werden muss. Wenn die Motorleistung der schwankenden Leistungsabnahme durch das Lüfterrad nicht exakt nachgeführt wird, kommt es zu Geschwindigkeitsschwankungen anderer von dem Motor angetriebener Aggregate. Wenn ein solches Motoraggregat in einer landwirtschaftlichen Maschine oder allgemein einem Fahrzeug verwendet wird, dann macht sich dies für den Fahrer in einem scheinbar unmotivierten Ruckeln der Fahrzeugbewegung, begleitet von einer abrupten Änderung des Geräuschpegels, bemerkbar, was den Eindruck einer technischen Störung erwecken kann. Eine Aufgabe der Erfindung ist, ein Kühlgebläse anzugeben, das einen solchen Eindruck vermeidet.

Die Aufgabe wird mit einem Kühlgebläse gemäß Anspruch 1 gelöst, indem bei einem Kühlgebläse mit einem Lüfterrad, einer Eingangswelle und einer Steuereinheit zum Festlegen einer Drehzahl des Lüfterrads in einem Drehzahlintervall zwischen Null und einer Eingangsdrehzahl der Eingangswelle, wobei die Steuereinheit eingerichtet ist, eine Drehzahl des Lüfterrads an einer oberen und einer unteren Grenze des Drehzahlintervalls bei jeder Eingangsdrehzahl zuzulassen und einen mittleren Bereich von Drehzahlen des Lüfterrads aber nur zuzulassen, wenn die Eingangsdrehzahl unter einer Grenzdrehzahl liegt, die Steuereinheit eingerichtet ist, im Falle, dass die Eingangsdrehzahl über der Grenzdrehzahl liegt, ein Umschalten des Lüfterrads von einem Betrieb bei einer Drehzahl oberhalb des mittleren Bereichs zu einem Betrieb bei einer Drehzahl unterhalb des mittleren Bereichs zu unterbinden.

Um einen Schlupf zwischen Eingangswelle und Lüfterrad zu ermöglichen, ist eine Kupplung vorgesehen, die eine mit der Eingangswelle verbundene Antriebsseite und eine mit dem Lüfterrad verbundene Abtriebsseite aufweist und die durch die Steuereinheit ansteuerbar ist, um wahlweise eine der unteren Grenze des Drehzahlintervalls entsprechende offene Stellung, eine der oberen Grenze des Drehzahlintervalls entsprechende geschlossene Stellung oder eine Zwischenstellung einzunehmen, die sich in ihrem bei gegebener Drehzahl der Antriebsseite auf die Abtriebsseite übertragenen Leistung unterscheiden, wobei die Steuereinheit eingerichtet ist, die offene Stellung und die geschlossene Stellung bei jeder Drehzahl zuzulassen, einen mittleren Bereich von Stellungen aber nur zuzulassen, wenn die Eingangsdrehzahl unterhalb einer Grenzdrehzahl liegt, die Steuereinheit eingerichtet ist, und das Umschalten des Lüfterrades in den Drehzahlbereich unterhalb des mittleren Bereichs zu unterbinden, indem sie ein Umschalten der Kupplung von einer Stellung, die weiter geschlossen ist als die Stellungen des mittleren Bereichs, in eine Stellung, die weiter offen ist als die Stellungen des mittleren Bereichs unterbindet.

Die Erfindung ist auf eine Viscokupplung anwendbar, d.h. eine Kupplung, in der Drehmoment zwischen Antriebs- und Abtriebsseite über eine viskose Ölschicht übertragen wird. Solche Kupplungen sind sehr robust und langlebig, solange sie innerhalb ihrer Spezifikationen betrieben werden, da in teiloffener Stellung der Kupplung keine Festkörperoberflächen aneinander reiben; allerdings kann es bei Betrieb in einer Stellung des mittleren Bereichs bei einer Eingangsdrehzahl über der oberen Grenze zu einer Überhitzung des Öls kommen, wodurch sich dessen Viskositätseigenschaften - und mit ihnen die Wirkung der Kupplung - dauerhaft verändern kann.

Typischerweise ist die Steuereinheit mit einem Temperatursensor verbunden, um eine erste Sollstellung der Kupplung anhand eines Vergleichs der vom Temperatursensor gemessenen Temperatur mit einer Solltemperatur festzulegen, und in dem Fall, dass die erste Sollstellung in dem mittleren Bereich liegt und die Eingangsdrehzahl oberhalb der Grenzdrehzahl liegt, so dass ein Betrieb bei der ersten Solldrehzahl auf Dauer zur Überhitzung der Kupplung führen würde, eine korrigierte Sollstellung der Kupplung einzustellen, die weiter geschlossen ist als die erste Sollstellung.

Der durch die Wahl der weiter geschlossenen Stellung übererhöhte Massenstrom des Kühlgebläses führt zu einer allmählichen Abnahme der vom Temperatursensor gemessenen Temperatur und folglich auch zu einer Verlagerung der ersten Sollstellung in Richtung einer weiteren Öffnung der Kupplung, so dass sich im Laufe der Zeit als erste Sollstellung eine Stellung ergibt, die weiter offen ist als die Stellungen des mittleren Bereichs. Indem auch in diesem Fall die korrigierte Sollstellung beibehalten wird, kann eine Umschaltung, und können das Ruckeln und die Änderung des Geräuschpegels, die damit verbunden sind, beliebig lang hinausgezögert werden.

Auch wenn die korrigierte Sollstellung auf unbestimmte Zeit beibehalten werden kann, sollte ein Verlassen dieser Stellung möglich sein. Bedingung hierfür kann sein, dass die Drehzahl der Antriebsseite von der ersten auf eine zweite Drehzahl abgenommen hat. Eine solche Drehzahlabnahme ist für den Fahrer eines mit dem Kühlgebläse ausgestatteten Fahrzeugs wahrnehmbar, so dass er von einer in der Folge auftretenden Umschaltung des Lüfters und Ungleichmäßigkeit der Fahrbewegung nicht mehr überrascht werden kann.

Die Drehzahlabnahme kann an einem mit dem Kühlgebläse ausgestatteten Motoraggregat auch willkürlich durch eine verminderte Leistungsanforderung eines Benutzers an einem Leistungssteller, z.B. durch Zurücknehmen eines Gaspedals oder -hebels herbeigeführt werden. In diesem Fall kann die Verminderung der Leistungsanforderung von der Steuereinheit als Bedingung gehandhabt werden für eine Freigabe des Umschaltens der Kupplung in eine Stellung, die weiter offen ist als die Stellungen des mittleren Bereichs.

Um wieviel niedriger als die erste Drehzahl die zweite Drehzahl sein muss, um eine Freigabe des Umschaltens zu bewirken, kann unterschiedlich festgelegt werden. Um die Häufigkeit des Umschaltens zu minimieren, kann vorgesehen werden, dass die zweite Drehzahl nicht größer als die Grenzdrehzahl ist.

Alternativ oder zusätzlich kann verlangt werden, dass die zweite Drehzahl die erste um einen positiven Differenzwert unterschreitet. Indem dieser Differenzwert groß genug gewählt wird, um von einem Benutzer wahrgenommen zu werden, kann verhindert werden, dass der Benutzer von einem Umschalten überrascht wird.

Die Kupplung ist vorzugsweise koaxial mit dem Lüfterrad angeordnet, um durch den vom Lüfterrad angetriebenen Luftstrom gekühlt zu werden.

Gegenstände der Erfindung sind ferner ein Motoraggregat mit einem Motor und einem Kühlgebläse wie oben beschrieben, das angeordnet ist, um den Verbrennungsmotor zu kühlen, sowie eine landwirtschaftliche Maschine, insbesondere ein Traktor, mit einem Kühlgebläse oder einem Motoraggregat wie oben beschrieben.

Die Aufgabe wird ferner gelöst durch ein Verfahren zum Betreiben eines eines Kühlgebläses mit einem Lüfterrad, dessen Drehzahl in einem Drehzahlintervall zwischen Null und einer Eingangsdrehzahl der Eingangswelle einstellbar ist, mit den Schritten:
a) Erfassen eines Ist-Verhältnisses zwischen Drehzahl des Lüfterrades und Eingangsdrehzahl;
b) Wählen eines ersten Soll-Verhältnisses der Drehzahlen;
c) Entscheiden, ob die Eingangsdrehzahl über einer Grenzdrehzahl liegt;
d) wenn nein, Einstellen des ersten Soll-Verhältnisses;
e) wenn ja, Einstellen eines zweiten Soll-Verhältnisses, das höher ist als die Verhältnisse eines oberhalb der Grenzdrehzahl verbotenen mittleren Bereichs, sofern das erste Soll-Verhältnis in dem mittleren Bereich liegt, oder sofern das Ist-Verhältnis höher ist als die Verhältnisse des mittleren Bereichs und die aktuelle Drehzahl der Antriebsseite nicht kleiner ist als eine frühere Drehzahl der Antriebsseite.

Zum Einstellen der Drehzahlverhältnisse ist zwischen Eingangswelle und Lüfterrad eine Viscokupplung angeordnet.

Die Auswahl der ersten Sollstellung kann auf einer gemessenen Temperatur, insbesondere einer Motor- oder Kühlertemperatur, basieren.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen stark schematisierte Seitenansicht einer landwirtschaftlichen Arbeitsmaschine mit einem Kühlgebläse;
- Fig. 2: eine Ansicht des Kühlgebläses;
- Fig. 3: eine teils geschnittene, teils perspektivische Ansicht einer in dem Kühlgebläse verbauten Kupplung;
- Fig. 4: mögliche Kombinationen von Drehzahlen von Antriebsseite und Abtriebsseite der Kupplung; und
- Fig. 5: ein Flussdiagramms eines von einer Steuereinheit der Arbeitsmaschine ausgeführten Arbeitsverfahrens.

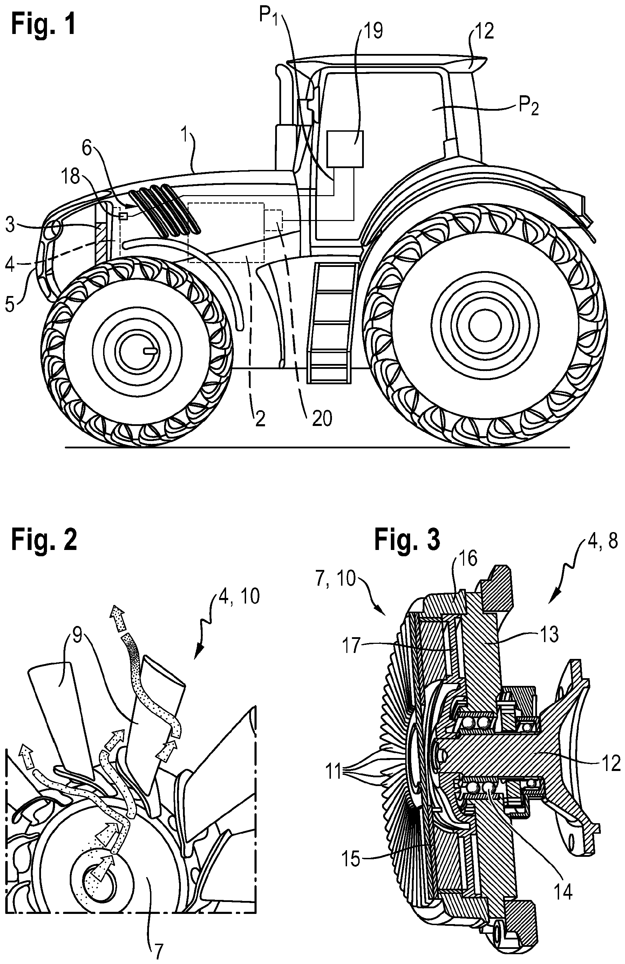

Fig. 1 zeigt schematisch einen Traktor von an sich bekanntem äußerem Erscheinungsbild. Unter einer Motorhaube 1 sind untergebracht: ein Verbrennungsmotor 2, ein Getriebe, ein Kühler 3 zum Abgeben von Wärme aus Kühlwasser des Verbrennungsmotors 2 an einen durch den Kühler 3 zirkulierenden Luftstrom und ein Kühlgebläse 4, das den Luftstrom zwischen einem Einlass 5, typischerweise einem Kühlergrill, und einem Auslass 6, hier in Form von Lüftungsschlitzen an seitlichen Flanken der Motorhaube 1, antreibt.

Fig. 2 zeigt eine partielle Ansicht des Kühlgebläses 4. Ein flach zylindrisches Gehäuse 7 einer Kupplung 8 und ein Kranz von radial von einer Umfangswand des Gehäuses 7 abstehenden Luftschaufeln 9 bilden ein Lüfterrad 10. Das Lüfterrad 10 ist mit in Längsrichtung des Motorraums orientierter Drehachse montiert; die Ansicht der Fig. 2 zeigt seine dem Kühler 3 zugewandte Seite. Eine dem Kühler 3 zugewandte Stirnseite des Gehäuses 7 trägt, wie besser in Fig. 3 zu erkennen, eine Vielzahl von radial langgestreckten Kühlrippen 11.

Eine dem Verbrennungsmotor 2 zugewandte Antriebsseite der Kupplung 8 ist durch eine Eingangswelle 12 gebildet, die fest mit einer Welle des Getriebes oder einer Kurbelwelle des Verbrennungsmotors 2 verbunden ist, um mit einer zur Drehzahl des Verbrennungsmotors 2 proportionalen Drehzahl zu rotieren.

Die Eingangswelle 12 verläuft durch eine Bodenplatte 13 des Gehäuses 7. Ein in der Öffnung angeordnetes Wälzlager 14 ermöglicht in einer offenen Stellung der Kupplung 8 eine reibungsarme Drehung der Eingangswelle 12 und des Gehäuses 7 gegeneinander.

Die Bodenplatte 13 ist formschlüssig verbunden mit einer Schale, die die Stirnseite 15 und die umlaufende Wand 16 des Gehäuses 7 bildet. Bodenplatte 13 und Schale begrenzen zusammen einen Hohlraum, in dem ein Ende der Eingangswelle 12 drehfest mit einer in axialer Richtung flexiblen Scheibe 17 verbunden ist. Der Hohlraum ist zwischen der Scheibe 17 und der Bodenplatte 13 bzw. zwischen der Scheibe 17 und der Stirnseite 15 mit einem viskosen Öl gefüllt. In der offenen Stellung ist die Scheibe 17 von der Bodenplatte 13 und der Stirnseite 15 durch breite Spalte beabstandet. Die dicke Ölschicht in den beiden Spalten erlaubt die Übertragung allenfalls eines geringen Drehmoments von der Eingangswelle 12 auf das Lüfterrad 10, d.h. die Drehzahl des Lüfterrades 10 ist nicht exakt Null, so nahe an Null, dass die Kühlwirkung des Kühlgebläses 4 vernachlässigbar ist.

Durch ein elektrisch angetriebenes Stellglied 18 (s. Fig. 1) ist die Scheibe 17 aus der mittigen Stellung zwischen Bodenplatte 13 und der Stirnseite 15 axial auslenkbar. Dadurch verengt sich einer der Spalte, und das über die dünner werdende Ölschicht übertragbare Drehmoment nimmt zu. Da die Stirnseite 15 mit ihren Kühlrippen 11 besser als die Bodenplatte 13 in der Lage ist, die dabei in dem Öl erzeugte Wärme abzugeben, erfolgt die axiale Auslenkung vorzugsweise in Richtung der Stirnseite 15. In der Praxis ist es schwierig, das Öl aus dem Spalt vollständig zu verdrängen und einen Reibschluss der Scheibe 17 mit der Stirnseite 15 herzustellen, dies ist aber auch nicht nötig; in einer geschlossenen Stellung der Kupplung 8 darf eine Ölschicht bestehen bleiben, sofern sie dünn genug ist, um eine Drehzahldifferenz zwischen der Eingangswelle 12 und dem Lüfterrad 10 vernachlässigbar zu machen.

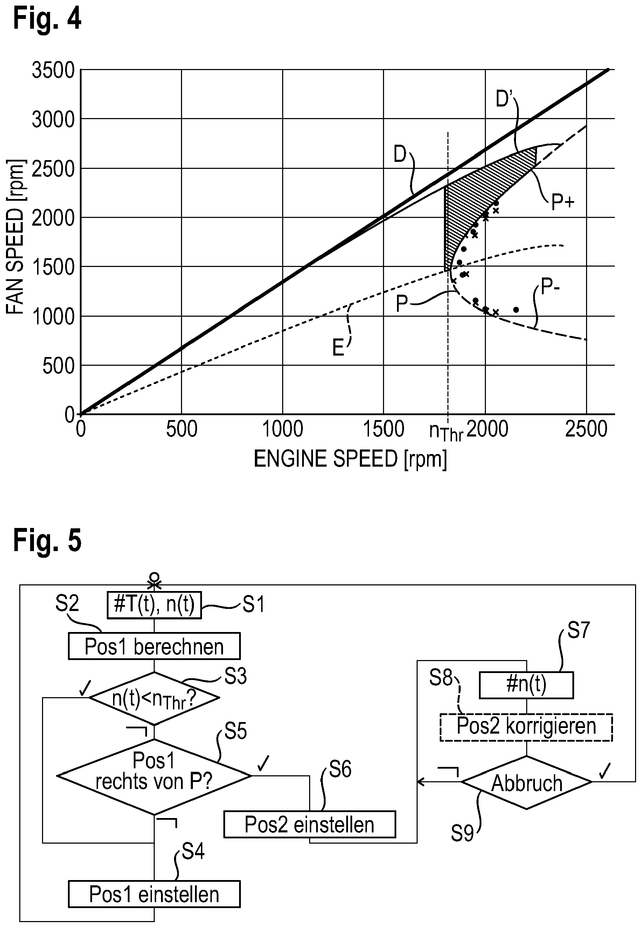

Eine Steuereinheit 19 steuert das Stellglied 18 anhand einer Temperatur, die von einem Temperatursensor 20 direkt am Verbrennungsmotor 2 oder an dessen Kühlwasser gemessen wird, um diese Temperatur trotz wechselnder Leistungsanforderungen an den Verbrennungsmotor 2 in einem Sollbereich zu halten, sowie anhand einer Drehzahl, die von einem Drehzahlsensor an der Kurbelwelle oder einem daran gekoppelten rotierenden Element des Motors 2 oder des Getriebes gemessen wird. Die Arbeitsweise der Steuereinheit wird im Folgenden anhand der Diagramme von Fig. 4 und 5 beschrieben.

Fig. 4 zeigt mögliche Arbeitspunkte des Kühlgebläses. Jeder Arbeitspunkt ist definiert als eine Kombination einer Drehzahl des Verbrennungsmotors 2, aufgetragen an der Abszisse, und einer Drehzahl des Lüfterrades 10, aufgetragen an der Ordinate. Die Drehzahl der Eingangswelle 12 steht zu der des Verbrennungsmotors 2 in einem festen Verhältnis. Mögliche Arbeitspunkte liegen zwangsläufig auf oder unter einer durch den Ursprung verlaufenden Geraden D, da die Drehzahl des Lüfterrades 10 nicht größer sein kann als die der Eingangswelle 12. Da auch in einer maximal geschlossenen Stellung der Kupplung 8 die verbleibende Ölschicht zwischen der Scheibe 17 und der Stirnseite 15 einen Schlupf zwischen Eingangswelle 12 und Lüfterrad 10 erlaubt, verläuft eine Kurve D', die die jeweils höchsten bei gegebener Drehzahl der Eingangswelle erreichbaren Drehzahlen des Lüfterrads 10 zeigt, geringfügig unterhalb der Geraden D. Eine untere Grenze der Lüfterdrehzahl, die bei vollständig offener Kupplung 4 erreicht wird, ist als Null angenommen, d.h. sie entspricht dem Verlauf der Abszisse. Jeder möglichen teiloffenen Stellung der Kupplung kann in dem Diagramm eine Kurve wie z.B. E zugeordnet werden, die für diese Stellung den Zusammenhang zwischen Drehzahlen der Eingangswelle 12 und des Lüfterrads 10 beschreibt.

In Schritt S1 der Fig. 5 werden die aktuelle Temperatur T(t) und Drehzahl n(t) von den entsprechenden Sensoren abgefragt. In der Steuereinheit 19 ist eine Rechenvorschrift hinterlegt, anhand derer, ggf. unter Berücksichtigung von zu früheren Zeiten gemessenen Temperaturen und anderen Parametern des Motors 2, in Schritt 2 eine erste Sollstellung Pos1 des Stellglieds 18 festgelegt wird, von der erwartet wird, dass diese eine Kühlleistung ergeben sollte, die geeignet ist, um die aktuelle Temperatur T(t) in einem Sollbereich zu halten oder diesem anzunähern.

In Schritt S3 wird geprüft, ob die gemessene Drehzahl n(t) unter einem Grenzwert n_{Thr} liegt. Wenn ja, dann wird die erste Sollstellung am Stellglied eingestellt (S4), und das Verfahren kehrt zum Ausgang zurück. In diesem Fall ist in jeder Stellung, die die Kupplung 8 einnehmen kann, die in der Kupplung freigesetzte Wärmeleistung niedrig genug, um eine Schädigung des Öls durch Überhitzung zu vermeiden.

Da die Stellung des Stellglieds kontinuierlich oder quasikontinuierlich einstellbar ist, kann , sofern die Leistungsanforderung an den Motor 2 nicht stark schwankt, im Laufe der Zeit ein stationärer Zustand erreicht werden, in der die Leistung des Kühlgebläses genau ausreicht, um die Abwärme des Kühlers 3 und der Kupplung 8 abzuführen, so dass die Drehzahl des Lüfterrades nur in geringem Umfang und allmählich variiert. Abrupte Schwankungen der vom Kühlgebläse 4 auf den Motor 2 ausgeübten Last werden so vermieden.

Wenn in Schritt S3 die gemessene Drehzahl n(t) über dem Grenzwert n_{Thr} liegt, dann besteht in einem mittleren Bereich von teiloffenen Stellungen der Kupplung, in Fig. 4 dargestellt als Fläche rechts von einer Kurve P, die Gefahr einer Überhitzung. Daher wird in diesem Fall geprüft, ob die erste Sollstellung in diesen Bereich fällt (S5). Wenn nein, d.h. wenn die erste Sollstellung einem Arbeitspunkt unterhalb eines unteren Schenkels P- der Kurve P oder oberhalb eines oberen Schenkels P+ derselben im Diagramm der Fig. 4 entspricht, dann verzweigt das Verfahren zu S4, um die erste Sollstellung einzustellen; wenn ja, dann wird anstelle der ersten Sollstellung eine korrigierte Sollstellung Pos2 eingestellt (S6) oder ggf. beibehalten, die einem Arbeitspunkt bei der aktuellen Drehzahl oberhalb des oberen Schenkels P+ entspricht. Im einfachsten Fall ist Pos2 die maximal geschlossene Stellung der Kupplung, d.h. sie entspricht einem Arbeitspunkt auf der Kurve D'.

Die daraus resultierende Kühlleistung des Kühlgebläses 4 ist größer als zum Konstanthalten der Temperatur T(t) erforderlich, deswegen erreicht die Temperatur T(t) im Laufe zahlreicher Iterationen des Verfahrens einen Wert, dem der hinterlegten Rechenvorschrift zufolge eine Stellung der Kupplung unterhalb des unteren Schenkels P- entspräche. Wenn in diesem Fall auf den Arbeitspunkt auf dem Schenkel P- umgeschaltet würde, dann würde dies zu einem für den Fahrer der Maschine nicht vorhersehbaren Zeitpunkt zu einer abrupten Veränderung der Motorlast und damit zu einem Rucken der Bewegung und einer sprunghaften Veränderung des Betriebsgeräuschs führen. Um dies zu vermeiden, kehrt das Verfahren im Anschluss an Schritt S6 nicht zum Ausgang zurück, sondern wechselt in eine Schleife, in der zunächst nur die aktuelle Drehzahl überwacht wird (S7), und die erst wieder verlassen wird, wenn diese aktuelle Drehzahl eine Abbruchbedingung erfüllt (S9).

Wenn korrigierte Sollstellung Pos2 die maximal geschlossene Stellung ist, dann ist eine Überhitzung der Kupplung auch im Drehzahlbereich über n_{Thr} ausgeschlossen, und die Stellung der Kupplung 4 kann solange unverändert bleiben, bis die Abbruchbedingung eintritt. Anderenfalls kann es nötig sein, zu überprüfen, ob nicht eine Drehzahländerung dazu geführt hat, dass die aktuelle Stellung der Kupplung einem Arbeitspunkt rechts von der Kurve P entspricht und sie ggf. erneut zu korrigieren (S8).

Als Abbruchbedingung S9 kann im einfachsten Fall überprüft werden, ob die Drehzahl der Eingangswelle 12 wieder unter n_{Thr} gesunken ist. Wenn dies der Fall ist, sind keinerlei Einschränkungen hinsichtlich der einstellbaren Stellungen der Kupplung 4 mehr zu berücksichtigen, und die Drehzahl des Kühlgebläses kann allmählich und ruckfrei von der korrigierten Stellung Pos 2 zu der sich unter den aktuellen Bedingungen aus der hinterlegten Rechenvorschrift ergebenden Stellung übergehen. Umgekehrt bedeutet dies, dass bei einer Drehzahl der Eingangswelle 12 oberhalb n_{Thr} niemals Arbeitspunkte unterhalb des Schenkels P- eingestellt werden.

Alternativ besteht die Möglichkeit, als Abbruchbedingung eine Rücknahme einer Leistungsanforderung des Fahrers an den Motor 2 oder eine daraus resultierende Verringerung der Drehzahl n(t) der Eingangswelle 12 zu wählen. In diesem Fall verbleibt das Kühlgebläse auf einem Arbeitspunkt oberhalb des Schenkels P+, solange die Drehzahl n(t) konstant bleibt oder zunimmt, bzw. solange der Fahrer einen Leistungsregler des Motors in konstanter Position hält. Nimmt er jedoch den Leistungsregler zurück, und vermindert sich deswegen die Drehzahl n(t), dann kann eine dadurch ausgelöste Verminderung der Drehzahl des Lüfterrades den Fahrer nicht überraschen; im Gegenteil hat er so die Möglichkeit, den Arbeitspunkt des Kühlgebläses nach eigenem Gutdünken zu beeinflussen.

Wohlgemerkt bedeutet ein Abbruch der Schleife S7-S9 nicht, dass in der Folge die nach der hinterlegten Vorschrift ermittelte erste Stellung Pos1 ohne weiteres eingestellt würde. Auch in diesem Fall finden die Überprüfungen der Schritte S3 und S4 statt, mit der Folge, dass wenn die erste Stellung einem Arbeitspunkt rechts der Kurve P entspricht, stattdessen wieder die korrigierte Stellung Pos 2 eingestellt wird. Der Fahrer kann daher einen Übergang zu einem Arbeitspunkt unterhalb des Schenkels P- nur dann willkürlich durch Vermindern der Leistungsanforderung herbeiführen, wenn die Temperatur T(t) soweit gesunken ist, dass die hinterlegte Vorschrift einen solchen Arbeitspunkt auswählen würde.

### Bezugszeichen

- 1: Motorhaube
- 2: Verbrennungsmotor
- 3: Kühler
- 4: Kühlgebläse
- 5: Einlass
- 6: Auslass
- 7: Gehäuse
- 8: Kupplung
- 9: Luftschaufel
- 10: Lüfterrad
- 11: Kühlrippe
- 12: Eingangswelle
- 13: Bodenplatte
- 14: Wälzlager
- 15: Stirnseite
- 16: Wand
- 17: Scheibe
- 18: Stellglied
- 19: Steuereinheit
- 20: Temperatursensor

## Patentansprüche

1. Kühlgebläse (4) mit einem Lüfterrad (10), einer Eingangswelle (12) und einer Steuereinheit (19) zum Festlegen einer Drehzahl des Lüfterrads (10) in einem Drehzahlintervall zwischen Null und einer Eingangsdrehzahl der Eingangswelle (12), wobei die Steuereinheit (19) eingerichtet ist, eine Drehzahl des Lüfterrads (10) an einer oberen Grenze (D') und einer unteren Grenze des Drehzahlintervalls bei jeder Eingangsdrehzahl zuzulassen und einen mittleren Bereich (M) von Drehzahlen des Lüfterrads (10) aber nur zuzulassen, wenn die Eingangsdrehzahl unter einer Grenzdrehzahl (n_{Thr}) liegt, wobei eine Kupplung (8) eine mit der Eingangswelle (12) verbundene Antriebsseite und eine mit dem Lüfterrad (10) verbundene Abtriebsseite aufweist und die durch die Steuereinheit (19) ansteuerbar ist, um wahlweise eine der unteren Grenze des Drehzahlintervalls entsprechende offene Stellung, eine der oberen Grenze (D') des Drehzahlintervalls entsprechende geschlossene Stellung oder eine Zwischenstellung einzunehmen, die sich in ihrem bei gegebener Drehzahl der Antriebsseite auf die Abtriebsseite übertragenen Leistung unterscheiden, wobei die Kupplung eine Viscokupplung ist, **dadurch gekennzeichnet, dass** die
Steuereinheit (19) eingerichtet ist, im Falle, dass die Eingangsdrehzahl über der Grenzdrehzahl (n_{Thr}) liegt, ein Umschalten des Lüfterrads (10) von einem Betrieb bei einer Drehzahl oberhalb des mittleren Bereichs (M) zu einem Betrieb bei einer Drehzahl unterhalb des mittleren Bereichs (M) zu unterbinden, wobei die Steuereinheit (19) eingerichtet ist, die offene Stellung und die geschlossene Stellung bei jeder Drehzahl zuzulassen, einen mittleren Bereich von Stellungen aber nur zuzulassen, wenn die Eingangsdrehzahl unterhalb der Grenzdrehzahl (n_{Thr}) liegt, und das Umschalten in den Drehzahlbereich unterhalb des mittleren Bereichs (M) zu unterbinden, indem sie ein Umschalten der Kupplung (8) von einer Stellung, die weiter geschlossen ist als die Stellungen des mittleren Bereichs, in eine Stellung, die weiter offen ist als die Stellungen des mittleren Bereichs unterbindet.

2. Kühlgebläse nach Anspruch 1 mit einem Temperatursensor (20), wobei die Steuereinheit (19) mit dem Temperatursensor (20) verbunden ist, um eine erste Sollstellung (Pos1) der Kupplung (8) anhand eines Vergleichs der vom Temperatursensor (20) gemessenen Temperatur mit einer Solltemperatur festzulegen, und in dem Fall, dass die Sollstellung (Pos1) in dem mittleren Bereich liegt und die Drehzahl oberhalb der Grenzdrehzahl (n_{Thr}) liegt, eine korrigierte Sollstellung (Pos2) der Kupplung (8) einzustellen, die weiter geschlossen ist als die erste Sollstellung (Pos1), wobei die Temperatur vom Temparatursensor (20) direkt an einem Verbrennungsmotor (2) oder an dessen Kühlwasser gemessen wird.

3. Kühlgebläse nach Anspruch 2, **dadurch gekennzeichnet, dass** das Unterbinden des Umschaltens umfasst, die korrigierte Sollstellung (Pos2) auch dann beizubehalten, wenn eine aktualisierte erste Sollstellung weiter offen wäre als die Stellungen des mittleren Bereichs.

4. Kühlgebläse nach einem der Ansprüche 1 bis 3, **dadurch gekennzeichnet, dass** die Steuereinheit (19) eingerichtet ist, ein Umschalten der Kupplung (8) von der Stellung (Pos2), die weiter geschlossen ist als die Stellungen des mittleren Bereichs, in eine Stellung, die weiter offen ist als die Stellungen des mittleren Bereichs wieder zuzulassen, wenn die Drehzahl der Antriebsseite von der ersten auf eine zweite Drehzahl abgenommen hat.

5. Kühlgebläse nach Anspruch 3, **dadurch gekennzeichnet, dass** die Steuereinheit eingerichtet ist, von der Stellung (Pos2), die weiter geschlossen ist als die Stellungen des mittleren Bereichs, in die erste Sollstellung umzuschalten, auch wenn diese weiter offen ist als die Stellungen des mittleren Bereichs, wenn die Drehzahl der Antriebsseite von der ersten auf eine zweite Drehzahl abgenommen hat.

6. Kühlgebläse nach Anspruch 3 oder 4, **dadurch gekennzeichnet, dass** die zweite Drehzahl nicht größer als die Grenzdrehzahl (n_{Thr}) ist.

7. Kühlgebläse nach einem der Ansprüche 3 bis 5, **dadurch gekennzeichnet, dass** die zweite Drehzahl um einen positiven Differenzwert kleiner ist als die erste Drehzahl.

8. Kühlgebläse nach einem der Ansprüche 1 bis 7, **dadurch gekennzeichnet, dass** die Kupplung (8) koaxial mit dem Lüfterrad (10) angeordnet ist.

9. Motoraggregat mit einem Verbrennungsmotor (2) und einem Kühlgebläse (4) nach einem der vorhergehenden Ansprüche, das angeordnet ist, um den Verbrennungsmotor (2) zu kühlen.

10. Motoraggregat nach Anspruch 9, **dadurch gekennzeichnet, dass** die Steuereinheit (19) an einen Leistungssteller des Verbrennungsmotors (2) gekoppelt ist, um das das Umschalten in den Drehzahlbereich unterhalb des mittleren Bereichs im Falle einer Verminderung der über den Leistungsregler angeforderten Leistung des Verbrennungsmotors (2) freizugeben.

11. Landwirtschaftliche Maschine mit einem Kühlgebläse (4) nach einem der Ansprüche 1 bis 8 oder einem Motoraggregat nach Anspruch 9.

12. Verfahren zum Betreiben eines Kühlgebläses (4) mit einer Eingangswelle (12) und einem Lüfterrad (10), dessen Drehzahl in einem Drehzahlintervall zwischen Null und einer Eingangsdrehzahl der Eingangswelle (12) einstellbar ist, mit den Schritten:
a) Erfassen eines Ist-Verhältnisses zwischen Drehzahl des Lüfterrades und Eingangsdrehzahl;
b) Wählen eines ersten Soll-Verhältnisses der Drehzahlen (S2);
c) Entscheiden, ob die Eingangsdrehzahl über einer Grenzdrehzahl (n_{Thr}) liegt (S3);
d) wenn nein, Einstellen des ersten Soll-Verhältnisses (S4);
e) wenn ja, Einstellen eines zweiten Soll-Verhältnisses (S6), das höher ist als die Verhältnisse eines oberhalb der Grenzdrehzahl (n_{Thr}) verbotenen mittleren Bereichs (M), sofern das erste Soll-Verhältnis in dem mittleren Bereich (M) liegt, oder sofern das Ist-Verhältnis höher ist als die Verhältnisse des mittleren Bereichs (M) und die aktuelle Drehzahl der Antriebsseite nicht kleiner ist als eine frühere Drehzahl der Antriebsseite, wobei die Drehzahlverhältnisse mittels einer zwischen Eingangswelle (12) und Lüfterrad (10) angeordneten Kupplung (8) eingestellt werden, wobei die Kupplung (8) eine Viscokupplung ist.

## Claims

1. A cooling fan (4) with a fan wheel (10), an input shaft (12) and a control unit (19) for setting a rotational speed of the fan wheel (10) in a range of rotational speeds of between zero and an input rotational speed of the input shaft (12), wherein the control unit (19) is configured to permit a rotational speed of the fan wheel (10) at an upper threshold (D') and a lower threshold of the rotational speed range for each input rotational speed and, however, only to permit a median range (M) of rotational speeds of the fan wheel (10) when the input rotational speed is below a threshold rotational speed (n_{Thr}), wherein a clutch (8) has a drive side connected to the input shaft (12) and an output side connected to the fan wheel (10) and which can be controlled by the control unit (19) in order to either take up an open position corresponding to the lower threshold of the rotational speed range, a closed position corresponding to the upper threshold (D') of the rotational speed range, or an intermediate position which differ in the power transmitted to the output side for a given rotational speed of the drive side, wherein the clutch is a viscous clutch,
**characterized in that**
the control unit (19) is configured such that, in the case in which the input rotational speed lies above the threshold rotational speed (n_{Thr}), to prevent a shift of the fan wheel (10) from an operation at a rotational speed above the median range (M) to an operation at a rotational speed below the median range (M), wherein the control unit (19) is configured to permit the open position and the closed position at each rotational speed, but only to permit a median range of positions when the input rotational speed lies below the threshold rotational speed (n_{Thr}), and to prevent the shift into the rotational speed range below the median range (M), **in that** it prevents a shift of the clutch (8) from a position which is more closed than the positions of the median range, into a position which is more open than the positions of the median range.

2. The cooling fan according to claim 1, with a temperature sensor (20), wherein the control unit (19) is connected to the temperature sensor (20) in order to set a first nominal position (Pos1) of the clutch (8) with the aid of a comparison of the temperature measured by the temperature sensor (20) with a nominal temperature, and in the case that the nominal position (Pos1) lies in the median range and the rotational speed lies above the threshold rotational speed (n_{Thr}), to set a corrected nominal position (Pos2) of the clutch (8) which is more closed than the first nominal position (Pos1), wherein the temperature of the temperature sensor (20) is measured directly on a internal combustion engine (2) or on its cooling water.

3. The cooling fan according to claim 2, **characterized in that** the prevention of shifting also comprises maintaining the corrected nominal position (Pos2) when an updated first nominal position would be more open than the positions of the median range.

4. The cooling fan according to one of claims 1 to 3, **characterized in that** the control unit (19) is configured to again permit a shift of the clutch (8) from the position (Pos2) which is more closed than the positions of the median range into a position which is more open than the positions of the median range when the rotational speed of the drive side has reduced from the first to a second rotational speed.

5. The cooling fan according to claim 3, **characterized in that** the control unit is configured to shift from the position (Pos2) which is more closed than the positions of the median range into the first nominal position also when this is more open than the positions of the median range, when the rotational speed of the drive side has reduced from the first to a second rotational speed.

6. The cooling fan according to claim 3 or claim 4, **characterized in that** the second rotational speed is not greater than the threshold rotational speed (n_{Thr}).

7. The cooling fan according to one of claims 3 to 5, **characterized in that** the second rotational speed is smaller than the first rotational speed by a positive differential value.

8. The cooling fan according to one of claims 1 to 7, **characterized in that** the clutch (8) is disposed coaxially with the fan wheel (10).

9. An engine assembly with an internal combustion engine (2) and a cooling fan (4) according to one of the preceding claims, which is disposed in order to cool the internal combustion engine (2).

10. The engine assembly according to claim 9, **characterized in that** the control unit (19) is coupled to a power controller of the internal combustion engine (2) in order to enable the shift into the rotational speed range below the median range in the case of a reduction of the power of the internal combustion engine (2) commanded by the power regulator.

11. An agricultural machine with a cooling fan (4) according to one of claims 1 to 8 or an engine assembly according to claim 9.

12. A method for operating a cooling fan (4) with an input shaft (12) and a fan wheel (10), the rotational speed of which can be set in a range of rotational speeds between zero and an input rotational speed of the input shaft (12), with the steps of:
a) detecting an actual ratio between the rotational speed of the fan wheel and the input rotational speed;
b) selecting a first nominal ratio for the rotational speeds (S2);
c) deciding whether the input rotational speed lies above a threshold rotational speed (n_{Thr}) (S3);
d) if not, setting the first nominal ratio (S4);
e) if yes, setting a second nominal ratio (S6) which is higher than the ratios of a forbidden median range (M) above the threshold rotational speed (n_{Thr}) if the first nominal ratio lies in the median range (M), or if the actual ratio is higher than the ratios of the median range (M) and the current rotational speed of the drive side is not smaller than an earlier rotational speed of the drive side, wherein
the ratios of the rotational speeds are set by means of a clutch (8) disposed between the input shaft (12) and fan wheel (10), wherein the clutch (8) is a viscous clutch.

## Revendications

1. Ventilateur de refroidissement (4) comprenant une roue de ventilateur (10), un arbre d'entrée (12) et une unité de commande (19) destinée à fixer une vitesse de rotation de la roue de ventilateur (10), dans un intervalle de vitesses de rotation compris entre zéro et une vitesse de rotation d'entrée de l'arbre d'entrée (12) ; l'unité de commande (19) étant conçue pour autoriser, pour chaque vitesse de rotation d'entrée, une vitesse de rotation de la roue de ventilateur (10) située à une limite supérieure (D') et à une limite inférieure de l'intervalle de vitesses de rotation, mais pour autoriser une plage intermédiaire (M) de vitesses de rotation de la roue de ventilateur (10) uniquement si la vitesse de rotation d'entrée est inférieure à une vitesse de rotation limite (n_{Tnr}) ; un accouplement (8) présentant un côté entraînement, relié à l'arbre d'entrée (12), et un côté sortie relié à la roue de ventilateur (10), et pouvant être activé par l'unité de commande (19) pour occuper, au choix, une position ouverte correspondant à la limite inférieure de l'intervalle de vitesses de rotation, une position fermée correspondant à la limite supérieure (D') de l'intervalle de vitesses de rotation, ou une position intermédiaire, lesquelles se distinguent les unes des autres par la puissance transmise au côté sortie, pour une vitesse de rotation donnée du côté entraînement, où l'accouplement est un viscocoupleur,
**caractérisé en ce que**
l'unité de commande (19) est conçue pour empêcher, dans le cas où la vitesse de rotation d'entrée est supérieure à la vitesse de rotation limite (n_{Thr}), la commutation de la roue de ventilateur (10) d'un fonctionnement avec une vitesse de rotation supérieure à la plage intermédiaire (M) à un fonctionnement avec une vitesse de rotation inférieure à la plage intermédiaire (M), l'unité de commande (19) étant conçue pour autoriser la position ouverte et la position fermée pour chaque vitesse de rotation, mais pour autoriser une plage intermédiaire de positions uniquement si la vitesse de rotation d'entrée est inférieure à la vitesse de rotation limite (n_{Thr}), et pour empêcher la commutation vers la plage de vitesses de rotation inférieure à la plage intermédiaire (M), en interdisant une commutation de l'accouplement (8) depuis une position qui est davantage fermée que les positions de la plage intermédiaire, vers une position qui est davantage ouverte que les positions de la plage intermédiaire.

2. Ventilateur de refroidissement selon la revendication 1, comprenant un capteur de température (20), l'unité de commande (19) étant reliée au capteur de température (20) pour définir une première position de consigne (Pos1) de l'accouplement (8), à l'aide d'une comparaison de la température mesurée par le capteur de température (20) avec une température de consigne, et pour régler, dans le cas où la position de consigne (Pos1) se situe dans la plage intermédiaire et la vitesse de rotation est supérieure à la vitesse de rotation limite (n_{Thr}), une position de consigne corrigée (Pos2) de l'accouplement (8), qui est davantage fermée que la première position de consigne (Pos1), la température étant mesurée par le capteur de température (20) directement sur un moteur à combustion interne (2) ou sur l'eau de refroidissement de celui-ci.

3. Ventilateur de refroidissement selon la revendication 2, **caractérisé en ce que** l'interdiction de la commutation comprend le fait de conserver la position de consigne corrigée (Pos2), même dans le cas où une première position de consigne actualisée serait davantage ouverte que les positions de la plage intermédiaire.

4. Ventilateur de refroidissement selon une des revendications 1 à 3, **caractérisé en ce que** l'unité de commande (19) est conçue pour autoriser de nouveau une commutation de l'accouplement (8), de la position (Pos2) qui est davantage fermée que les positions de la plage intermédiaire, dans une position qui est davantage ouverte que les positions de la plage intermédiaire, si la vitesse de rotation du côté entraînement a diminué et est passée de la première à une deuxième vitesse de rotation.

5. Ventilateur de refroidissement selon la revendication 3, **caractérisé en ce que** l'unité de commande est conçue pour commuter de la position (Pos2), qui est davantage fermée que les positions de la plage intermédiaire, à la première position de consigne, même lorsque celle-ci est davantage ouverte que les positions de la plage intermédiaire, si la vitesse de rotation du côté entraînement a diminuée et est passée de la première à une deuxième vitesse de rotation.

6. Ventilateur de refroidissement selon la revendication 3 ou 4, **caractérisé en ce que** la deuxième vitesse de rotation n'est pas supérieure à la vitesse de rotation limite (n_{Thr}).

7. Ventilateur de refroidissement selon une des revendications 3 à 5, **caractérisé en ce que** la deuxième vitesse de rotation est inférieure d'une valeur différentielle positive à la première vitesse de rotation.

8. Ventilateur de refroidissement selon une des revendications 1 à 7, **caractérisé en ce que** l'accouplement (8) est disposé de façon coaxiale avec la roue de ventilateur (10).

9. Groupe moteur comprenant un moteur à combustion interne (2) et un ventilateur de refroidissement (4) selon une des revendications précédentes, qui est mis en place en vue de refroidir le moteur à combustion interne (2).

10. Groupe moteur selon la revendication 9, **caractérisé en ce que** l'unité de commande (19) est couplée à un contrôleur de puissance du moteur à combustion interne (2) afin d'autoriser la commutation à la plage de vitesse de rotation inférieures à la plage intermédiaire, en cas de diminution de la puissance du moteur à combustion interne (2) requise par l'intermédiaire du contrôleur de puissance.

11. Machine agricole dotée d'un ventilateur de refroidissement (4) selon une des revendications 1 à 8 ou d'un groupe moteur selon la revendication 9.

12. Procédé pour faire fonctionner un ventilateur de refroidissement (4) comprenant une roue de ventilateur (10) dont la vitesse de rotation peut être réglée dans un intervalle de vitesses de rotation compris entre zéro et une vitesse de rotation d'entrée de l'arbre d'entrée (12), comprenant les étapes suivantes :
a) détermination d'un rapport réel entre la vitesse de rotation de la roue de ventilateur et la vitesse de rotation d'entrée ;
b) sélection d'un premier rapport de consigne des vitesses de rotation (S2) ;
c) décision pour savoir si la vitesse de rotation d'entrée est supérieure à une vitesse de rotation limite (n_{Thr}) (S3) ;
d) si non, réglage du premier rapport de consigne (S4) ;
e) si oui, réglage d'un deuxième rapport de consigne (S6) qui est plus élevé que les rapports d'une plage intermédiaire (M) interdite, supérieure à la vitesse de rotation limite (n_{Thr}), dans la mesure où le premier rapport de consigne se situe dans la plage intermédiaire (M), ou dans la mesure où le rapport réel est plus élevé que les rapports de la plage intermédiaire (M) et la vitesse de rotation actuelle du côté entraînement n'est pas inférieure à une vitesse de rotation antérieure du côté entraînement, sachant que
les rapports de vitesses de rotation sont réglés au moyen d'un accouplement (8) placé entre l'arbre d'entrée (12) et la roue de ventilateur (10), l'accouplement (8) étant un viscocoupleur.
